# EUROPEAN PATENT SPECIFICATION

(11) **EP 3 016 803 B1**
(45) Date of publication and mention of the grant of the patent: **01.03.2017**
(21) Application number: 14786273.4
(22) Date of filing: 03.07.2014
(51) Int. Cl.: B32B 7/02, B32B 25/08, B32B 25/14, B32B 27/32, B65D 65/40, B65D 71/00

(54) **STRETCH PLASTIC FILM**
KUNSTSTOFFSTRECKFOLIE
FILM PLASTIQUE ÉTIRABLE

(30) Priority: 04.07.2013 IT MI20131119
(43) Date of publication of application: 11.05.2016
(73) Proprietor: Bia S.r.l., 80121 Napoli (IT)
(72) Inventor: SCOTUZZI, Alessandro, I-25080 TIGNALE-BRESCIA (IT); SCOTUZZI, Enrico, I-25080 TIGNALE-BRESCIA (IT)
(74) Representative: Martegani, Franco
(86) International application number: PCT/IB2014/062834
(87) International publication number: WO 2015/001516

(56) References cited:
- EP-A1- 1 201 406
- WO-A1-03/029000
- US-A- 6 083 611
- US-A- 6 093 480
- US-B1- 6 492 010

## Description

### Field of the invention

The present invention relates to a stretching plastic film, as well as to the use thereof for wrapping, in particular for the preparation of bundles for transporting bottles of drinks, such as mineral water, soft drinks and the like.

### Background of the Invention

As known, in the field of wrapping it is substantially resorted to two different types of materials; films are made of heat-shrinking or stretching plastic material, depending on the special physical features thereof.

In the wrapping processes in which use is made of stretching plastic film (typically low-density linear polyethylene), it is provided to stretch remarkably the film during the application thereof to the objects to be wrapped (wrapping is in the form of coils arranged one on top of the other or in the form of a hood), so that the elastic return thereof strengthens the products and maintains the wrapping stable. The properties of these films allow them to stretch by a great amount longitudinally (up to 200-300%), so that rather reduced amounts of film allow to cover relatively large surfaces. This film is usually employed for the wrapping of pallet-loaded solid material: it is advantageous from an economic point of view, but it is not suitable in all cases in which it is not possible to apply either a high pressure or share forces to the products to be wrapped (for example, a pile of small collapsible boxes).

In the processes in which use is made of heat-shrinking plastic film it is instead provided that the film be simply laid on the products (in this case too, in the form of coils arranged one on top of the other, or in the form of a hood), without causing appreciable stretching or elongation thereof. Subsequently, heat is applied, thereby obtaining a strengthening of the wrapping by heat-shrinking. This process allows to better modulate the stress applied to the product, it is hence effective also with loads which could be damaged by pressure application; conversely, it exposes the products to heat and is much more burdensome from an energetic point of view and of the used-up material (the un-stretched film is used in significant thicknesses, of the order of 20-120 µm, hence with a remarkable consumption of material with respect to the stretching film).

A particularly active sector of wrapping is that of bundles, in particular of the bottle bundles for drinks, such as mineral water, soft drinks, and the like. Normally bottles are made of plastic material, too. The bottles of this type are the origin of non negligible problems, since it is a series of close objects, of a relatively high specific weight, which imposes a remarkable load to the bundle containing them. The amount of manufactured bundles in the drink industry is extremely high: that implies that even small improvements or cost reductions in this sector has overall highly important economic impact.

Traditionally, bundles are made of heat-shrinking films. However, the use of such materials for this purpose is not optimal. In fact, heat-shrinking films are relatively expensive and require heat application to achieve the final shape thereof. Such application is itself expensive per se, requiring energy, and is also the source of some practical problems. As a matter of fact, the relatively high temperatures which are reached, although for short periods of time, may alter the properties of the drinks (denaturing the proteins thereof) or the plastic which the bottles are made of (favouring the release of not always fully harmless plasticisers into the drink itself).

There is hence a demand for bundles made from a film of stretching plastic material.

However, the attempts made in this respect have so far implied other problems, since, given the great extension capacity of these films, the bundle obtained tends to yield under its own weight, making it difficult to grab and transport the bundles for not even particularly long distances. Moreover, during the application phase it is not possible to reach high levels of pre-stretching of the film, lest the application of excessive pressures on the bottles.

Unfortunately, the technologies employed today and the formulation of stretching films have not proved suitable for the use on bundles. Stretching films are currently obtained with different techniques, starting from EVA copolymers or linear polyethylene (LLDPE). With the bubble technology, resort is made to raw material in the form of elastomeric resin with a high elasticity degree, but with a low mechanic resistance and high manufacturing costs. The currently most effective technology is the so-called cast co-extrusion, wherein different layers of polymers are extruded through a flat-die head and arranged on cooled cylinders. However, a combination of material and extrusion technology which gives fully satisfactory results for the specific sector of bundle wrapping has not been identified yet, where the elongation/elasticity of the material can also be modest, but a good tenacity and mechanical strenght (especially in a longitudinal direction) must be obtained.

Hence current stretching films do not solve the problems set forth above and heat-shrinking films are the only ones which, still today, guarantee bundles a certain compactness and shape solidity, since they adapt to the wrapped product, without squashing the contents thereof and without a significant residual elasticity.

Same examples of plastic film employed according to the prior art are disclosed in WO03/029000, EP1201406, US6492010, US6093480, US6083611. None of them has proven to be satisfactory in the field of bottle bundles.

### Summary of the Invention

The problem at the bottom of the invention is to propose a film which overcomes the mentioned drawbacks, that is, which allows to wrap objects even at a high specific weight, without excessively yielding and without losing compactness, even with relatively low thicknesses and without requiring costly heat-shrinking operations.

These objects are reached through a film of plastic material as described, in its essential features, in the main claim reported at the bottom.

Other preferred inventive aspects of the invention are described in the dependent claims.

Further features and advantages of the film according to the invention will in any case be more evident from the following detailed description, of a preferred embodiment of the same given by way of a non-limiting example.

### Detailed Description of a Preferred Embodiment

A plastic film is manufactured through processes and plants typical of stretching films, but with innovative formulation and manufacturing arangements.

In particular, the film according to the invention is obtained from a flat-die head cast co-extrusion plant, performing a co-extrusion of three layers of different composition, an inner layer, a central layer and an outer layer. In this context, inner layer means the layer which is located in the inside of the wrapped package, i.e. the layer being in contact with the product to be packaged.

The innermost layer is an elastomeric material. In particular, the inner layer consists of a blend of propylene-based elastomer, containing ethylene, in an amount of 14-17% by weight, preferably 16% by weight, and polyethylene obtained as copolymer of ethylene-hexene polymerised with metallocene catalysts (so- called metallocene polyethylene). The melt flow index of propylene-based elastomer ranges between 1 and 2 g/10min, preferably 1.3 g/10min and density of the order of 0.8 g/cm³, preferably 0,866 g/cm³. The melt flow index of polyethylene ranges between 3 and 4 g/10min, preferably 3.5 g/10min, with density of the order of 0.9 g/cm³, preferably 0.918 g/cm³.

The central layer consists exclusively of polyethylene, obtained as copolymer of ethylene-hexene polymerised with metallocenes. The fluidity index ranges between 0.8 and 1.2 g/10min, preferably 1.0 g/10min. The density is of the order of 0.9 g/cm³, preferably 0.920 g/cm³.

Finally, the outer layer has the same composition as the central layer, however, with a much higher melt flow index, ranging between 3 and 4 g/10min, preferably 3.5 g/10min. The density is of the order of 0.9 g/cm³, preferably 0.918 g/cm³.

The specific formulation stated here above, which has proved particularly effective for the purpose of the invention, can hardly be extruded with conventional techniques of cast co-extrusion.

Therefore, according to a preferred embodiment of the invention, the film is obtained on a three-layer, cast co-extrusion plant, wherein it is necessary for the extrusion die head to be maintained at a pressure above 500 bar (for such purpose, the screws of the extruders are manufactured explicitly for achieving such result) and the spooler (drawing roller) must impart no tension to the just-extruded film: in particular, no widening cylinder must be employed and the control of the drawing force/traction of the film must be precise, so as to impose no velocity increase downstream of the extrusion die head.

The features of the film obtained according to the invention, are such as to allow the reaching of the desired physical performances with a thickness of only 10 µm, instead of the 23 µm of conventional heat-shrinking films, which allows a remarkable saving of material and reduction of the amount of energy necessary for the manufacturing thereof. A cut of such costs up to 70% can be achieved only for the part connected to the thickness reduction.

The film thus obtained has a smaller longitudinal elasticity that those of conventional stretching films, but is more elastic to transversal widening and to perforation, with easily controllable elastic memories.

The present invention thus offers a film of plastic material which can advantageously be used for the manufacturing of bottle bundles. As a matter of fact, it does not require a significant pre-stretch, which would otherwise tend to squash the bottles, and maintains a biaxial elastic memory, which keeps compact the wrapped product; due to the reduced longitudinal elasticity thereof, it furthermore keeps a bundle compactness and tenacity, even higher than the currently employed heat-shrinking film.

Besides having dimensional and mechanical stability comparable to that of heat-shrinking films, the film of the invention allows implementations on the field which are more similar to those of stretching films. With manufacturing costs comparable with those of stretching films currently in use, a lighter material is obtained, suited to be used on bottle bundles and which does not require the energy consumption currently necessary for heat-shrinking films (and hence a cut of energy consumptions by over 95%).

The film according to the invention, due to the fact that it does not require a high stretch amount, does not produce excessive residual tensions and can hence be applied spiral-like to groups of bottles without resulting in a high share force and disrupting the alignment of the bottles. Methodologies and apparatuses suitable for the spiral-like winding of this film, to form a bundle, are for example the ones described in Italian application no. MI2011A001543 in the name of Area Srl.

However, it is understood that the invention must not be considered limited to the particular embodiment described above, but that different variants are possible, all within the reach of a person skilled in the field, without departing from the scope of the invention, as defined in the following claims.

## Claims

1. Plastic film for wrapping, obtained by cast co-extrusion in three layers, **characterized in that** an inner layer consists of a blend of propylene-based elastomer, containing ethylene, and metallocene polyethylene,
a central layer and an outer layer consist of metallocene polyethylene respectively with different melt flow indexes, that of metallocene polyethylene of the central layer being the lower one.

2. Film as claimed in 1, wherein said propylene-based elastomer of the inner layer contains ethylene in an amount of 14-17% by weight, preferably 16% by weight.

3. Film as claimed in 1 or 2, wherein the melt flow index of said propylene-based elastomer ranges between 1 and 2 g/10 min, preferably 1.3 g/10 min and a density of the order of 0.8 g/cm³, preferably 0.866 g/cm³.

4. Film as claimed in 3, wherein the melt flow index of metallocene polyethylene in the inner layer ranges between 3 and 4 g/10 min, preferably 3.5 g/10 min, with a density of the order of 0.9 g/cm³, preferably 0.9184.

5. Film as claimed in any one of the preceding claims, wherein the melt flow index of metallocene polyethylene in the central layer ranges between 0.8 and 1.2 g/10 min, preferably 1.0 g/10 min, with a density of the order of 0.9 g/cm³, preferably 0.920 g/cm³.

6. Film as claimed in any one of the preceding claims, wherein the melt flow index of metallocene polyethylene in the outer layer ranges between 3 and 4 g/10 min, preferably 3.5 g/10 min. with a density of the order of 0.9 g/cm³, preferably 0.918 g/cm³.

7. Film as claimed in any one of the preceding claims, wherein said metallocene polyethylene is an ethylene-hexene co-polymer polymerised with metallocene catalysts.

8. Film as claimed in any one of the preceding claims, wherein said cast co-extrusion is made to occur with a flat die head maintained at pressures above 500 bar and avoiding to impose any longitudinal and transversal tension on the extruded film during and up to winding.

9. Wrapping bundle of a plurality of bottles, **characterised in that** it consists of a film as claimed in any one of the preceding claims, wound spiral-like around the bottles.

## Patentansprüche

1. Kunststofffolie zum Einwickeln, die durch Gießcoextrusion in drei Schichten erhalten ist, **dadurch gekennzeichnet, dass**
eine innere Schicht aus einer Mischung aus Elastomer auf Propylenbasis, die Ethylen enthält, und Metallocenpolyethylen besteht,
eine zentrale Schicht und eine äußere Schicht aus Metallocenpolyethylen jeweils mit unterschiedlichen Schmelzfließindizes bestehen, wobei der von Metallocenpolyethylen der zentralen Schicht der niedrigere ist.

2. Folie nach Anspruch 1, wobei das Elastomer auf Propylenbasis der inneren Schicht Ethylen in einer Menge von 14 - 17 Gewichts-%, bevorzugt 16 Gewichts-% enthält.

3. Folie nach Anspruch 1 oder 2, wobei der Schmelzfließindex des Elastomers auf Propylenbasis in einem Bereich zwischen 1 und 2 g/10 min, bevorzugt 1,3 g/10 min liegt, und eine Dichte in der Größenordnung von 0,8 g/cm³, bevorzugt 0,866 g/cm³ liegt.

4. Folie nach Anspruch 3, wobei der Schmelzfließindex von Metallocenpolyethylen in der inneren Schicht zwischen 3 und 4 g/10 min, bevorzugt 3,5 g/10 min liegt, mit einer Dichte in der Größenordnung von 0,9 g/cm³, bevorzugt 0,9184.

5. Folie nach einem der vorhergehenden Ansprüche, wobei der Schmelzfließindex von Metallocenpolyethylen in der zentralen Schicht in einem Bereich zwischen 0,8 und 1,2 g/10 min, bevorzugt 1,0 g/10 min liegt, mit einer Dichte in der Größenordnung von 0,9 g/cm³, bevorzugt 0,920 g/cm³.

6. Folie nach einem der vorhergehenden Ansprüche, wobei der Schmelzfließindex von Metallocenpolyethylen in der äußeren Schicht in einem Bereich zwischen 3 und 4 g/10 min, bevorzugt 3,5 g/10 min liegt, mit einer Dichte in der Größenordnung von 0,9 g/cm³, bevorzugt 0,918 g/cm³.

7. Folie nach einem der vorhergehenden Ansprüche, wobei das Metallocenpolyethylen ein Ethylen-Hexen-Copolymer ist, das mit Metallocenkatalysatoren polymerisiert ist.

8. Folie nach einem der vorhergehenden Ansprüche, wobei die Gießcoextrusion derart vorgenommen wird, dass sie mit einem flachen Extruderkopf erfolgt, der auf Drücken über 500 bar gehalten wird, und vermieden wird, während und bis zum Wickeln irgendeine Längs- und Querzugspannung auf die extrudierte Folie aufzubringen.

9. Wickelbündel aus einer Mehrzahl von Flaschen, **dadurch gekennzeichnet, dass** es aus einer Folie nach einem der vorhergehenden Ansprüche besteht, die spiralenartig um die Flaschen herum gewickelt ist.

## Revendications

1. Film de plastique pour emballage, obtenu par co-extrusion à plat en trois couches, **caractérisé en ce qu'**il comporte
- une couche interne constituée d'un mélange d'un élastomère à base de propylène et comportant des motifs éthylène et d'un polyéthylène métallocène,
- et une couche centrale et une couche externe qui sont constituées de polyéthylènes métallocène dont les indices respectifs de fluidité à chaud sont différents, celui du polyéthylène métallocène de la couche centrale étant le plus bas des deux.

2. Film conforme à la revendication 1, dans lequel ledit élastomère à base de propylène de la couche interne comporte des motifs éthylène en une proportion de 14 à 17 % en poids, et de préférence de 16 % en poids.

3. Film conforme à la revendication 1 ou 2, dans lequel l'indice de fluidité à chaud dudit élastomère à base de propylène vaut entre 1 et 2 g/10 min, et de préférence 1,3 g/10 min, et sa masse volumique est de l'ordre de 0,8 g/cm³, et vaut de préférence 0,866 g/cm³.

4. Film conforme à la revendication 3, dans lequel l'indice de fluidité à chaud du polyéthylène métallocène de la couche interne vaut entre 3 et 4 g/10 min, et de préférence 3,5 g/10 min, et sa masse volumique est de l'ordre de 0,9 g/cm³, et vaut de préférence 0,9184 g/cm³.

5. Film conforme à l'une des revendications précédentes, dans lequel l'indice de fluidité à chaud du polyéthylène métallocène de la couche centrale vaut entre 0,8 et 1,2 g/10 min, et de préférence 1,0 g/10 min, et sa masse volumique est de l'ordre de 0,9 g/cm³, et vaut de préférence 0,920 g/cm³.

6. Film conforme à l'une des revendications précédentes, dans lequel l'indice de fluidité à chaud du polyéthylène métallocène de la couche externe vaut entre 3 et 4 g/10 min, et de préférence 3,5 g/10 min, et sa masse volumique est de l'ordre de 0,9 g/cm³, et vaut de préférence 0,918 g/cm³.

7. Film conforme à l'une des revendications précédentes, dans lequel ledit polyéthylène métallocène est un copolymère d'éthylène et d'hexène qu'on a fait polymériser à l'aide d'un catalyseur de type métallocène.

8. Film conforme à l'une des revendications précédentes, pour lequel on réalise ladite co-extrusion à plat au moyen d'une tête de filière plate maintenue sous une pression supérieure à 500 bars, en évitant de soumettre le film extrudé à toute tension longitudinale ou transversale pendant les opérations, jusqu'à l'enroulement du film.

9. Emballage entourant un pack de plusieurs bouteilles, **caractérisé en ce qu'**il comporte un film, conforme à l'une des revendications précédentes, enroulé en spirale autour des bouteilles.
